# EUROPÄISCHE PATENTSCHRIFT

(11) **EP 4 715 727 B1**
(45) Veröffentlichungstag und Bekanntmachung des Hinweises auf die Patenterteilung: **17.06.2026**
(21) Anmeldenummer: 24201088.2
(22) Anmeldetag: 18.09.2024
(51) Int. Cl.: G06T 5/00, G06T 7/00, A01M 1/02

(54) **OPTIMIERUNG VON BILDAUFNAHMEN**
OPTIMIZING IMAGE RECORDINGS
OPTIMISATION DE CAPTURE D'IMAGE

(43) Veröffentlichungstag der Anmeldung: 25.03.2026
(73) Patentinhaber: Bayer Aktiengesellschaft, 51373 Leverkusen (DE)
(72) Erfinder: TEMPEL, Matthias, 50935, Köln (DE); BORN, Fabian Christian, 57319, Bad Berleburg (DE)
(74) Vertreter: BIP Patents

(56) Entgegenhaltungen:
- CN-A- 116 843 951
- CN-U- 212 624 062
- TW-B- I 839 893
- ANONYMOUS: "Color calibration - Wikipedia", 14 May 2024 (2024-05-14), XP093250303, Retrieved from the Internet <URL:https://en.wikipedia.org/w/index.php?title=Color_calibration&oldid=1223833830> [retrieved on 20250214]
- ZINA-SABRINA DUMA ET AL: "Varroa destructor detection on honey bees using hyperspectral imagery", ARXIV.ORG, CORNELL UNIVERSITY LIBRARY, 201 OLIN LIBRARY CORNELL UNIVERSITY ITHACA, NY 14853, 21 March 2024 (2024-03-21), XP091706559
- FERNÁNDEZ ENRIC MAROTO: "Image Analysis of Bacterial colonies in Classic and alternative Gel-Based Growth Media", 1 January 2018 (2018-01-01), XP055793402, Retrieved from the Internet <URL:https://ddd.uab.cat/pub/tesis/2018/hdl_10803_666842/emf1de1.pdf> [retrieved on 20210408]
- DE CESARO JÚNIOR TELMO ET AL: "InsectCV: A system for insect detection in the lab from trap images", ECOLOGICAL INFORMATICS, ELSEVIER, AMSTERDAM, NL, vol. 67, 6 December 2021 (2021-12-06), XP086933865, ISSN: 1574-9541, [retrieved on 20211206], DOI: 10.1016/J.ECOINF.2021.101516
- OTONIEL LÓPEZ ET AL: "Monitoring Pest Insect Traps by Means of Low-Power Image Sensor Technologies", SENSORS, vol. 12, no. 12, 13 November 2012 (2012-11-13), pages 15801 - 15819, XP055352347, DOI: 10.3390/s121115801
- PASSIAS ATHANASIOS ET AL: "Comparative Study of Camera- and Sensor-Based Traps for Insect Pest Monitoring Applications", 2023 IEEE CONFERENCE ON AGRIFOOD ELECTRONICS (CAFE), IEEE, 25 September 2023 (2023-09-25), pages 55 - 59, XP034456432, DOI: 10.1109/CAFE58535.2023.10291672

## Beschreibung

### TECHNISCHES GEBIET

Die vorliegende Offenbarung befasst sich mit dem Überwachen von Gliederfüßern auf Basis von Bildaufnahmen.

Gegenstände der vorliegenden Offenbarung sind ein computer-implementiertes Verfahren, eine Vorrichtung und ein Computerprogramm.

### EINLEITUNG

Z.-S. Duma *et al.* offenbaren ein Verfahren zur Erkennung von *Varroa destructor* bei Honigbienen mithilfe von Hyperspektralbildern (Z.-S. Duma et al.: Varroa destructor detection on honey bees using hyperspectral imagery, Computers and Electronics in Agriculture 224 (2024) 109219).

CN212624062U offenbart ein Hilfsgerät zur Bilderfassung.

T. De Cesaro Jünior *et al.* offenbaren ein System zur Erkennung von Insekten im Labor anhand von Fallenbildern (T. De Cesaro Jünior et al.: InsectCV: A system for insect detection in the lab from trap images, Ecological Informatics, Volume 67, March 2022, 101516).

O. Löpez *et al.* offenbaren eine Überwachung von Fallen für Schadinsekten mittels Bildsensortechnologien mit geringer Leistung (O. Löpez et al.: Monitoring pest insect traps by means of low-power image sensor technologies, Sensors (Basel). 2012 Nov 13;12(11):15801-19. doi: 10.3390/s121115801).

WO2020/058175A1 offenbart ein Verfahren, eine Vorrichtung und ein Computerprogramm zum Überwachen von Gliederfüßern. Die Vorrichtung umfasst eine Kamera, mit der eine Bildaufnahme eines Sammelbereichs, in dem sich ein oder mehrere Gliederfüßer aufhalten, erzeugt wird. Die Vorrichtung umfasst eine Sendeeinheit, mit der die Bildaufnahme über ein Netzwerk an ein Computersystem gesandt wird. Auf dem Computersystem kann die Bildaufnahme durch einen Nutzer und/oder automatisiert analysiert werden, z.B. um Gliederfüßer in der Bildaufnahme zu detektieren, zu identifizieren und/oder zu zählen.

Die Vorrichtung ist für den Betrieb im Freien (z.B. in einem Feld für Kulturpflanzen) hergerichtet. Sie ist im Freien Umwelteinflüssen ausgesetzt wie beispielsweise Wind, Niederschlägen, Feuchtigkeit, Temperaturschwankungen und/oder Sonneneinstrahlung. Tiere und/oder Pflanzen können mit der Vorrichtung interagieren. Es können Verschmutzungen auftreten. Alle diese Faktoren können einen Einfluss auf die Qualität der von der Kamera erzeugten Bildaufnahmen haben. Bei einer verminderten Qualität kann es schwierig sein, Gliederfüßer in der Bildaufnahme zu detektieren, zu identifizieren und/oder zu zählen.

### ZUSAMMENFASSUNG

Diesem und weiteren Aspekten widmet sich die vorliegende Offenbarung.

Ein erster Gegenstand der vorliegenden Offenbarung ist ein computer-implementiertes Verfahren umfassend:
- Empfangen einer Bildaufnahme, wobei die Bildaufnahme einen Sammelbereich für Gliederfüßer zeigt, wobei der Sammelbereich ein Kennzeichen umfasst,
- Reduzieren einer Abweichung zwischen dem in der Bildaufnahme abgebildeten Kennzeichen und einer Referenz durch Transformieren der Bildaufnahme,
- Speichern der transformierten Bildaufnahme und/oder Übermitteln der transformierten Bildaufnahme an ein separates Computersystem und Erkennen, Lokalisieren, Identifizieren und/oder Zählen von Gliederfüßern in der transformierten Bildaufnahme,
   wobei das Kennzeichen eine Form, eine Farbe, eine Struktur, eine Textur, ein Muster, eine Schraffur, ein Zeichen, ein Code und/oder ein anderes sichtbares Merkmal ist oder umfasst, wobei das Reduzieren der Abweichung umfasst:
   - Eingeben der Bildaufnahme in ein trainiertes Modell des maschinellen Lernens, wobei das Modell des maschinellen Lernens konfiguriert ist, auf Basis der Bildaufnahme und auf Basis von Modellparametern eine transformierte Bildaufnahme zu erzeugen, wobei das Modell des maschinellen Lernens auf Basis von Trainingsdaten trainiert wurde, wobei die Trainingsdaten Eingabedaten und Zieldaten umfassen, wobei die Eingabedaten Trainingsbildaufnahmen umfassen, wobei die Zieldaten mindestens eine Trainingsbildaufnahme umfassen, wobei jede Trainingsbildaufnahme einen Sammelbereich umfassend das Kennzeichen zeigt, wobei das Trainieren des Modells des maschinellen Lernens umfasst:
      o Eingeben der Eingabedaten in das Modell des maschinellen Lernens,
      ∘ Empfangen von Ausgabedaten von dem Modell des maschinellen Lernens,
      o Reduzieren einer Abweichung zwischen den Ausgabedaten und den Zieldaten durch Modifizieren der Modellparameter,
- Empfangen einer transformierten Bildaufnahme von dem trainierten Modell des maschinellen Lernens.

Ein weiterer Gegenstand der vorliegenden Offenbarung ist eine Vorrichtung zum Überwachen von Gliederfüßern umfassend
- eine Kamera und
- eine Steuereinheit,
   wobei die Steuereinheit konfiguriert ist,
- die Kamera zu veranlassen eine Bildaufnahme zu erzeugen, wobei die Bildaufnahme einen Sammelbereich für Gliederfüßer zeigt, wobei der Sammelbereich ein Kennzeichen umfasst,
- eine Abweichung zwischen dem in der Bildaufnahme abgebildeten Kennzeichen und einer Referenz durch Transformieren der Bildaufnahme zu reduzieren,
- Gliederfüßer in der transformierten Bildaufnahme zu erkennen, zu lokalisieren, zu identifizieren und/oder zu zählen,
   wobei das Kennzeichen eine Form, eine Farbe, eine Struktur, eine Textur, ein Muster, eine Schraffur, ein Zeichen, ein Code und/oder ein anderes sichtbares Merkmal ist oder umfasst, wobei das Reduzieren der Abweichung umfasst:
   - Eingeben der Bildaufnahme in ein trainiertes Modell des maschinellen Lernens, wobei das Modell des maschinellen Lernens konfiguriert ist, auf Basis der Bildaufnahme und auf Basis von Modellparametern eine transformierte Bildaufnahme zu erzeugen, wobei das Modell des maschinellen Lernens auf Basis von Trainingsdaten trainiert wurde, wobei die Trainingsdaten Eingabedaten und Zieldaten umfassen, wobei die Eingabedaten Trainingsbildaufnahmen umfassen, wobei die Zieldaten mindestens eine Trainingsbildaufnahme umfassen, wobei jede Trainingsbildaufnahme einen Sammelbereich umfassend das Kennzeichen zeigt, wobei das Trainieren des Modells des maschinellen Lernens umfasst:
      ∘ Eingeben der Eingabedaten in das Modell des maschinellen Lernens,
      ∘ Empfangen von Ausgabedaten von dem Modell des maschinellen Lernens,
      ∘ Reduzieren einer Abweichung zwischen den Ausgabedaten und den Zieldaten durch Modifizieren der Modellparameter,
- Empfangen einer transformierten Bildaufnahme von dem trainierten Modell des maschinellen Lernens.

Ein weiterer Gegenstand der vorliegenden Offenbarung ist ein nicht-flüchtiges computerlesbares Speichermedium, auf dem ein Computerprogramm gespeichert ist, das, wenn es von einer Steuereinheit einer Vorrichtung zum Überwachen von Gliederfüßern ausgeführt wird, die Steuereinheit veranlasst folgende Schritte auszuführen:
- Empfangen einer Bildaufnahme, wobei die Bildaufnahme einen Sammelbereich für Gliederfüßer zeigt, wobei der Sammelbereich ein Kennzeichen umfasst,
- Reduzieren einer Abweichung zwischen dem in der Bildaufnahme abgebildeten Kennzeichen und einer Referenz durch Transformieren der Bildaufnahme,
- Speichern der transformierten Bildaufnahme und/oder Übermitteln der transformierten Bildaufnahme an ein separates Computersystem und Erkennen, Lokalisieren, Identifizieren und/oder Zählen von Gliederfüßern in der transformierten Bildaufnahme,
   wobei das Kennzeichen eine Form, eine Farbe, eine Struktur, eine Textur, ein Muster, eine Schraffur, ein Zeichen, ein Code und/oder ein anderes sichtbares Merkmal ist oder umfasst, wobei das Reduzieren der Abweichung umfasst:
   - Eingeben der Bildaufnahme in ein trainiertes Modell des maschinellen Lernens, wobei das Modell des maschinellen Lernens konfiguriert ist, auf Basis der Bildaufnahme und auf Basis von Modellparametern eine transformierte Bildaufnahme zu erzeugen, wobei das Modell des maschinellen Lernens auf Basis von Trainingsdaten trainiert wurde, wobei die Trainingsdaten Eingabedaten und Zieldaten umfassen, wobei die Eingabedaten Trainingsbildaufnahmen umfassen, wobei die Zieldaten mindestens eine Trainingsbildaufnahme umfassen, wobei jede Trainingsbildaufnahme einen Sammelbereich umfassend das Kennzeichen zeigt, wobei das Trainieren des Modells des maschinellen Lernens umfasst:
      ∘ Eingeben der Eingabedaten in das Modell des maschinellen Lernens,
      ∘ Empfangen von Ausgabedaten von dem Modell des maschinellen Lernens,
      o Reduzieren einer Abweichung zwischen den Ausgabedaten und den Zieldaten durch Modifizieren der Modellparameter,
- Empfangen einer transformierten Bildaufnahme von dem trainierten Modell des maschinellen Lernens.

### KURZE BESCHREIBUNG DER ZEICHNUNGEN

Fig. 1 zeigt eine Ausführungsform des computer-implementierten Verfahrens der vorliegenden Offenbarung in Form eines Ablaufschemas.
Fig. 2 zeigt beispielhaft und schematisch eine Ausführungsform der Vorrichtung der vorliegenden Offenbarung.

### AUSFÜHRLICHE OFFENBARUNG

Die Gegenstände der vorliegenden Offenbarung werden im Folgenden näher erläutert, ohne zwischen den Gegenständen der vorliegenden Offenbarung (Verfahren, Vorrichtung, Computerprogramm) zu unterscheiden. Vielmehr sollen die nachfolgenden Ausführungen sinngemäß für alle Gegenstände der Erfindung gelten, unabhängig davon, in welchem Zusammenhang (Verfahren, Vorrichtung, Computerprogramm) sie beschrieben werden.

Wenn in der vorliegenden Beschreibung oder in den Ansprüchen Schritte in einer Reihenfolge angegeben sind, bedeutet dies nicht unbedingt, dass die Offenbarung auf die angegebene Reihenfolge beschränkt ist. Vielmehr ist es denkbar, dass die Schritte auch in einer anderen Reihenfolge oder auch parallel zueinander ausgeführt werden können, es sei denn, dass zum Beispiel ein Schritt auf einem anderen aufbaut, was erfordert, dass der aufbauende Schritt anschließend ausgeführt wird (dies wird aber im Einzelfall klar). Die angegeben Reihenfolgen sind somit beispielhafte Ausführungsformen der vorliegenden Offenbarung.

Die Gegenstände der vorliegenden Offenbarung werden an einigen Stellen in Bezug auf Zeichnungen näher erläutert. Dabei sind in den Zeichnungen konkrete Ausführungsformen mit konkreten Merkmalen und Merkmalskombinationen dargestellt, die in erster Linie der Veranschaulichung dienen; die vorliegende Offenbarung soll nicht so verstanden werden, dass sie auf die in den Zeichnungen dargestellten Merkmale und Merkmalskombinationen beschränkt ist. Ferner sollen Aussagen, die bei der Beschreibung der Zeichnungen in Bezug auf Merkmale und Merkmalskombinationen getroffen werden, allgemein gelten, das heißt auch auf andere Ausführungsformen übertragbar und nicht auf die gezeigten Ausführungsformen beschränkt sein.

Der Artikel "ein" bedeutet "ein oder mehrere"; es sei denn es steht z.B. ein "nur" oder "lediglich" davor. Dies gilt analog auch für den Artikel "eine".

Die Ausdrücke "basierend auf" und "auf Basis von" bedeuten "zumindest teilweise basierend auf", sofern nicht ausdrücklich etwas anderes angegeben ist.

Der Begriff "oder" ist nicht als exklusives "oder" zu verstehen, d.h. der Ausdruck "A oder B" umfasst "A", "B" sowie "A und B".

Ansonsten haben die in dieser Offenbarung verwendeten Begriffe die Bedeutung, die sie im Stand der Technik, insbesondere in dem in dieser Offenbarung angeführten Stand der Technik haben.

Die vorliegende Offenbarung stellt Mittel bereit, um die Qualität einer Bildaufnahme eines Sammelbereichs zu optimieren.

Der Sammelbereich ist ein Bereich, der von Gliederfüßern aufgesucht werden kann. Es kann sich dabei um eine ebene Oberfläche einer Tafel oder Karte oder dergleichen handeln. Es kann sich auch um den Boden eines Behälters handeln. Es kann sich auch um eine Flüssigkeit in einem Behälter handeln. Es kann sich auch um einen Teil einer Pflanze handeln, beispielsweise ein Blatt oder eine Frucht oder ein anderer Teil einer Pflanze.

In einer Ausführungsform der vorliegenden Offenbarung ist der Sammelbereich ein Teil einer Fangvorrichtung für Gliederfüßer.

In einer Ausführungsform der vorliegenden Offenbarung umfasst die Fangvorrichtung einen mit einer Flüssigkeit gefüllten Behälter, z.B. eine Fangschale, wie sie in WO2020/058175A1, WO2020/058170A1, WO2021/213824A1 oder WO2022/243150A1 beschrieben ist.

In einer Ausführungsform der vorliegenden Offenbarung umfasst die Fangvorrichtung eine mit einem Klebemittel versehene Oberfläche, wie sie in beispielsweise in WO2023/043871A1, WO2018/131853A1 oder WO2004/095919A2 beschrieben ist.

In einer Ausführungsform der vorliegenden Offenbarung umfasst die Fangvorrichtung einen zeltartigen Rahmen, der einen Innenraum definiert, in den Gliederfüßer gelangen können. Solche Fangvorrichtungen sind auch unter der Bezeichnung Delta-Falle bekannt (siehe z.B. WO2018/078638A1); sie können jedoch andere Formen als die Form eines Prismas aufweisen.

Als Lockmittel kann der Sammelbereich in einer Farbe gestaltet sein (z.B. gelb oder rot), die spezifische Gliederfüßer anlockt. Neben oder anstelle einer Farbe können weitere/andere Mittel vorhanden sein, die Gliederfüßer anlocken (Lockmittel). Denkbar ist zum Beispiel die Verwendung eines Pheromons oder eines Duftstoffes, der z.B. eine Nahrungsquelle vortäuscht. Auch der Einsatz einer Quelle für elektromagnetische Strahlung im infraroten, sichtbaren und/oder ultravioletten Bereich zum Anlocken von (spezifischen) Gliederfüßern ist denkbar. Auch der Einsatz von Geräuschen, die beispielsweise paarungswillige Männchen und/oder Weibchen imitieren, ist denkbar. Auch der Einsatz von speziellen Mustern, die zum Beispiel eine Pflanze imitieren, ist denkbar.

Im Falle der Verwendung eines mit einer Flüssigkeit gefüllten Behälters kann dieser mit Wasser und optional mit einem oder mehreren Zusätzen gefüllt sein. Ein solcher Zusatz kann beispielsweise ein Tensid zur Erniedrigung der Oberflächenspannung sein. Ein solcher Zusatz kann auch ein Lockstoff zum Anlocken von (spezifischen) Gliederfüßern sein. Ein solcher Zusatz kann auch ein Mittel zur Verhinderung von Algenbildung (beispielsweise ein Herbizid) sein.

Im Falle einer Karte oder Tafel kann diese mit einem Klebstoff versehen sein, um Gliederfüßer bewegungsunfähig zu machen.

"Gliederfüßer" (Arthropoden) sind eine vielfältige Gruppe wirbelloser Tiere, die zum Stamm der Arthropoda gehören.

Gliederfüßer spielen in Ökosystemen eine wichtige Rolle als Bestäuber, Zersetzer und/oder als Teil des Nahrungsnetzes. Sie können auch von wirtschaftlicher Bedeutung sein, sowohl zum Nutzen (z.B. Bestäubung, Seidenproduktion) als auch zum Nachteil (z.B. als Schädlinge in der Landwirtschaft, Überträger von Krankheiten).

Gliederfüßer werden in mehrere Gruppen (Subphyla und Klassen) eingeteilt, darunter Insekten und Spinnentiere.

In einer Ausführungsform der vorliegenden Offenlegung bezieht sich der Begriff "Gliederfüßer" ausschließlich auf Insekten und Spinnentiere.

In einer anderen Ausführungsform der vorliegenden Offenbarung bezieht sich der Begriff "Gliederfüßer" ausschließlich auf Insekten.

In einer anderen Ausführungsform der vorliegenden Offenbarung bezieht sich der Begriff "Gliederfüßer" ausschließlich auf erwachsene Insekten.

In einer anderen Ausführungsform der vorliegenden Offenbarung bezieht sich der Begriff "Gliederfüßer" ausschließlich auf Insekten in Form von Raupen.

In einer anderen Ausführungsform der vorliegenden Offenbarung bezieht sich der Begriff "Gliederfüßer" ausschließlich auf Spinnentiere.

In einer anderen Ausführungsform der vorliegenden Offenbarung bezieht sich der Begriff "Gliederfüßer" ausschließlich auf Milben.

In einem ersten Schritt wird eine Bildaufnahme empfangen, wobei in der Bildaufnahme ein Sammelbereich abgebildet ist. Mit anderen Worten: es wird eine Bildaufnahme empfangen, die einen Sammelbereich zeigt oder repräsentiert.

Der Begriff "Empfangen" kann bedeuten, dass eine Bildaufnahme von einer Kamera oder einem separaten Computersystem übermittelt wird. Der Begriff "Empfangen" kann bedeuten, dass eine Bildaufnahme von einer Kamera oder einem separaten Computersystem abgerufen wird. Der Begriff "Empfangen" kann bedeuten, dass eine Bildaufnahme aus einem Datenspeicher ausgelesen wird. Der Begriff "Empfangen" kann bedeuten, dass eine Bildaufnahme von einem Nutzer in das System der vorliegenden Offenbarung eingegeben wird.

Eine "Bildaufnahme" ist eine üblicherweise visuelle Repräsentation einer Szene und/oder eines oder mehrerer Objekte, die durch die Wechselwirkung von Licht mit lichtempfindlichen Substanzen oder Sensoren erfasst oder erzeugt wird. Der Begriff "Bildaufnahme" umfasst eine breite Palette von Formaten, einschließlich, aber nicht beschränkt auf digitale Fotos, Videos und Wärmebilder.

Üblicherweise handelt es sich bei der Bildaufnahme um eine digitale Bildaufnahme. Der Begriff "digital" bedeutet, dass die Bildaufnahme von einer Maschine, in der Regel einem Computersystem, verarbeitet werden kann. Unter "Verarbeitung" werden die bekannten Verfahren zur elektronischen Datenverarbeitung (EDV) verstanden.

Digitale Bildaufnahmen können mit Computersystemen und Computerprogrammen verarbeitet, bearbeitet und reproduziert sowie in standardisierte Datenformate konvertiert werden, wie zum Beispiel JPEG (Grafikformat der Joint Photographic Experts Group), PNG (Portable Network Graphics) oder SVG (Scalable Vector Graphics). Digitale Bildaufnahmen können mit geeigneten Anzeigegeräten visualisiert werden, wie zum Beispiel mit Computermonitoren, Projektoren und/oder Druckern.

In einer digitalen Bildaufnahme werden Bildinhalte üblicherweise durch ganze Zahlen repräsentiert und gespeichert. In den meisten Fällen handelt es sich um zweidimensionale Bilder, die binär kodiert und gegebenenfalls komprimiert sein können. Bei den digitalen Bildaufnahmen handelt es sich üblicherweise um Rastergrafiken, bei denen die Bildinformation in einer gleichmäßigen Rasterung abgelegt ist. Rastergrafiken bestehen aus einer rasterförmigen Anordnung von so genannten Bildelementen, z.B. Bildpunkten (Pixel) im Fall von zweidimensionalen Darstellungen oder Volumenelementen (Voxel) im Fall dreidimensionaler Darstellungen, denen jeweils eine Farbe bzw. ein Grauwert zugeordnet ist. Die Hauptmerkmale einer 2D-Rastergrafik sind daher die Bildgröße (Breite und Höhe gemessen in Pixeln, umgangssprachlich auch Bildauflösung genannt) sowie die Farbtiefe. Einem Bildelement einer digitalen Bildaufnahme ist üblicherweise eine Farbe oder ein Grauwert zugeordnet. Die für ein Bildelement verwendete Kodierung der Farbe definiert sich unter anderem über den Farbraum und die Farbtiefe. Der einfachste Fall ist ein Binärbild, bei dem ein Bildelement einen Schwarzweiß-Wert speichert. Bei einer Bildaufnahme, dessen Farbe über den so genannten RGB-Farbraum definiert ist (RGB steht für die Grundfarben Rot, Grün und Blau), umfasst jedes Bildelement drei Farbwerten, einen Farbwert für die Farbe Rot, einen Farbwert für die Farbe Grün und einen Farbwert für die Farbe Blau. Die Farbe eines Bildelements ergibt sich z.B. durch die Überlagerung (additives Mischen) der drei Farbwerte. Der einzelne Farbwert ist z.B. in 256 unterscheidbare Stufen diskretisiert, die Tonwerte genannt werden und üblicherweise von 0 bis 255 reichen. Die Farbnuance "0" eines jeden Farbkanals ist die dunkelste. Haben alle drei Kanäle den Tonwert 0, erscheint das entsprechende Bildelement schwarz; haben alle drei Kanäle den Tonwert 255, erscheint das entsprechende Bildelement weiß. Vereinfachend wird in dieser Beschreibung davon ausgegangen, dass die vorliegenden Bildaufnahmen RGB-Rastergrafiken mit einer spezifischen Zahl an Bildelementen sind. Diese Annahme soll jedoch in keiner Weise limitierend verstanden werden. Dem Fachmann der Bildbearbeitung ist klar, wie er die Lehre dieser Beschreibung auf Bildaufnahmen, die in anderen Bildformaten vorliegen und/oder bei denen die Farbwerte anders kodiert sind, übertragen kann.

Bei der mindestens einen Bildaufnahme kann es sich auch um einen oder mehrere Ausschnitte aus einer Videosequenz handeln.

Die mindestens eine Bildaufnahme wird üblicherweise mit Hilfe einer Kamera oder mehreren Kameras erzeugt.

Eine "Kamera" ist ein Gerät oder System, das dazu bestimmt ist, Bildaufnahmen von externen Objekten und Phänomenen zu erfassen und aufzuzeichnen. Eine Kamera nutzt dazu beispielsweise elektromagnetische Strahlung, Schallwellen oder andere physikalische Vorgänge, die visuell dargestellt werden können. Die Kamera wandelt empfangene Signale (z.B. optische oder akustische) in andere Signale (z.B. elektrische) und/oder Daten um, die gespeichert, verarbeitet, angezeigt und/oder übertragen werden können. Der Begriff "Kamera" umfasst Geräte, die mit allen Medien oder Technologien arbeiten, einschließlich analoger und digitaler, optischer, elektronischer, chemischer oder anderer Methoden der Bilderfassung. Der Begriff "Kamera" umfasst ein breites Spektrum von Geräten einschließlich, aber nicht beschränkt auf Fotokameras, Videokameras, Wärmebildkameras, Radarsysteme, Ultraschall-Bildgebungsgeräte, Elektronenmikroskope und alle künftigen Technologien, die die Funktion der Bilderfassung erfüllen können.

In einer Ausführungsform der vorliegenden Offenbarung ist die Kamera eine Digitalkamera, die mit Hilfe eines oder mehrerer Bildsensoren zweidimensionale Abbilder aus Licht auf elektrischem Weg erzeugt. Üblicherweise handelt es sich um halbleiterbasierte Bildsensoren wie beispielsweise CCD-(CCD *= charge-coupled device*) oder CMOS-Sensoren (CMOS *= complementary metal-oxidesemiconductor*)*.* Optische Elemente wie Linsen, Blenden und dergleichen dienen einer möglichst scharfen Abbildung von Gliederfüßern im Sammelbereich auf dem Bildsensor. Eine Digitalkamera ist konfiguriert, digitale Bildaufnahmen zu erzeugen.

Die Kamera ist auf den Sammelbereich gerichtet. Mit anderen Worten: die Kamera ist so ausgerichtet und konfiguriert, dass sie Bildaufnahmen von dem Sammelbereich oder einem Teil davon erzeugt.

Die Kamera wird dazu verwendet, digitale Bildaufnahmen von dem Sammelbereich oder einem Teil davon zu erzeugen. Die erzeugten Bildaufnahmen können verwendet werden, (i) um zu erkennen, ob sich ein oder mehrere Gliederfüßer in dem abgebildeten Sammelbereich befinden (Detektieren von Gliederfüßern), (ii) die Position eines Gliederfüßers in der Bildaufnahme zu bestimmen (Lokalisieren von Gliederfüßern), (iii) Gliederfüßer in dem abgebildeten Sammelbereich zu zählen und/oder (iv) Gliederfüßer zu identifizieren, d.h. festzustellen, um welchen Gliederfüßer (z.B. Unterklasse, Überordnung, Ordnung, Unterordnung, Familie, Gattung, Art, Stadium, Nützling, Schädling) es sich handelt.

Der Sammelbereich umfasst ein Kennzeichen. Es ist möglich, dass der Sammelbereich mehrere Kennzeichen umfasst.

Ein Kennzeichen ist ein charakteristisches Merkmal. Dabei kann es sich um eine Form, eine Farbe, eine Struktur, eine Textur, ein Muster, eine Schraffur, ein Zeichen, ein Code (z.B. ein alphanumerischer Code und/oder ein Barcode und/oder ein Matrixcode) und/oder ein anderes sichtbares Merkmal handeln.

Ein Kennzeichen kann eine Kombination von mehreren Merkmalen sein.

Es ist möglich, dass der Sammelbereich herstellungsbedingt ein solches Kennzeichen aufweist. Die in WO2022/243150A1 offenbarte Fangschale weist beispielsweise Vertiefungen auf, die in einer Bildaufnahme zu erkennen sind. Solche Vertiefungen sind ein charakteristisches Kennzeichen des Sammelbereichs. Der Sammelbereich kann eine charakteristische Form (z.B. rund oder eckig) aufweisen, die in einer Bildaufnahme abgebildet sein kann. Eine solche charakteristische Form ist ein Kennzeichen des Sammelbereichs.

Kennzeichen können auch in den Sammelbereich eingebracht werden. Kennzeichen können in eine Fläche des Sammelbereichs eingraviert, eingeätzt, eingebrannt, eingeprägt und/oder auf sonstige Weise in eine Fläche des Sammelbereichs eingebracht sein. Kennzeichen können auf eine Fläche des Sammelbereichs aufgedruckt und/oder aufgeklebt werden. Kennzeichen können in eine Fläche des Sammelbereichs gestanzt werden. Kennzeichen können im Spritzgussverfahren in eine Fläche des Sammelbereichs eingebracht werden. Kennzeichen können mittels eines Lasers in eine Fläche des Sammelbereichs eingebracht werden.

Das Kennzeichen kann eine oder mehrere gerade Linien umfassen. Mehrere Linien können parallel oder senkrecht zueinander verlaufen.

Das Kennzeichen kann eine charakteristische geometrische Form umfassen wie beispielsweise ein gleichseitiges Dreieck, ein Quadrat und/oder einen Kreis.

Das Kennzeichen kann einen Bereich umfassen, der eine definierte Farbe aufweist.

Das Kennzeichen kann mehrere Bereiche umfassen, die unterschiedliche Farben aufweisen, zum Beispiel die Farben Rot, Grün, Blau, Cyan, Magenta, Gelb, Schwarz, Weiß und/oder einen oder mehrere Grautöne.

Das mindestens eine Kennzeichen ist in der von der Kamera erzeugten Bildaufnahme des Sammelbereichs abgebildet. Mit anderen Worten: die von der Kamera erzeugte Bildaufnahme zeigt den Sammelbereich oder einen Teil davon sowie das mindestens eine Kennzeichen.

In einem weiteren Schritt wird eine Abweichung zwischen dem in der Bildaufnahme abgebildeten Kennzeichen und einer Referenz reduziert. Das Reduzieren der Abweichung erfolgt durch Transformieren der Bildaufnahme. Der Vorgang des Transformierens einer Bildaufnahme wird auch als Transformation bezeichnet. Das Ergebnis einer solchen Transformation ist eine transformierte Bildaufnahme.

Eine "Transformation" ist eine Funktion oder ein Operator (oder eine Kombination von verschiedenen Funktionen oder Operatoren), die/der ein oder mehrere Bildaufnahmen als Eingabe entgegennimmt und eine transformierte Bildaufnahme als Ausgabe erzeugt. Beispiele für Transformationen sind weiter unten beschrieben.

"Reduzieren" bedeutet üblicherweise, dass durch Transformation der Bildaufnahme eine transformierte Bildaufnahme erzeugt wird, in der die Abweichung zwischen dem in der transformierten Bildaufnahme abgebildeten Kennzeichen und der Referenz geringer ist als die Abweichung zwischen dem in der (von der Kamera erzeugten) Bildaufnahme abgebildeten Kennzeichen und der Referenz. Es ist möglich, dass durch das Reduzieren/Transformieren eine transformierte Bildaufnahme erzeugt wird, bei der keine Abweichung zwischen dem in der transformierten Bildaufnahme abgebildeten Kennzeichen und der Referenz feststellbar ist. Es ist aber auch möglich, dass mittels Transformation die Abweichung nicht vollständig entfernt (eliminiert) werden kann.

Die Referenz kann eine Referenz-Bildaufnahme sein, in der das Kennzeichen naturgetreu abgebildet ist, das heißt so abgebildet ist, wie es in dem Sammelbereich z.B. unter definierten Lichtverhältnissen vorliegt.

Die Abweichung kann die Folge einer defekten Beleuchtung, von Reflexen, einer defekten Kamera und/oder die Folge von anderen/weiteren Funktionsbeeinträchtigungen sein. Beispiele für Funktionsbeeinträchtigungen sind in den Offenlegungen WO2024165430A1 und WO2024180056A1 beschrieben, deren Inhalt durch diese Bezugnahme vollständig in diese Offenbarung aufgenommen sein soll.

Die Abweichung zwischen dem in der Bildaufnahme abgebildeten Kennzeichen und der Referenz kann eine Farbe betreffen. Es ist möglich, dass das mindestens eine in der Bildaufnahme abgebildete Kennzeichen eine andere Farbe oder eine andere Farbverteilung aufweist als eine Referenz.

Das Reduzieren einer Farbabweichung kann folgendes umfassen:
- Ermitteln eines Farbwertes eines Bildelements, wobei das Bildelement das Kennzeichen repräsentiert,
- Feststellen einer Abweichung des Farbwerts von einem Referenzfarbwert,
- Reduzieren der Abweichung durch Durchführen einer Farbkorrektur bei der Bildaufnahme.

In dieser Ausführungsform umfasst die Transformation eine Farbkorrektur.

Es ist möglich, dass mehrere Farbwerte von mehreren Bildelementen ermittelt werden.

Es ist möglich, dass mehrere ermittelte Farbwerte mit einem oder mehreren Referenzfarbwerten verglichen werden, um eine oder mehrere Farbabweichungen zu identifizieren.

Es ist möglich, dass eine Farbwertverteilung ermittelt wird.

Es ist möglich, dass eine ermittelte Farbwertverteilung mit einer Referenzfarbwertverteilung verglichen wird, um eine oder mehrere Farbabweichungen zu identifizieren.

Die Farbwertverteilung kann ein Histogramm eines Bereichs der Bildaufnahme sein, der das Kennzeichen umfasst. Die Farbwertverteilung kann ein Teil eines Histogramms eines Bereichs der Bildaufnahme sein, der das Kennzeichen umfasst.

Ein "Histogramm" ist üblicherweise das Ergebnis einer statistischen Analyse der Häufigkeiten von Farbwerten in einer Bildaufnahme. Ein Histogramm gibt die Häufigkeitsverteilung der Farbwerte in einer Bildaufnahme wieder. Ein Histogramm kann z.B. in Form eines Diagramms oder einer grafischen Darstellung vorliegen, in der für jeden Farbwert oder für einen Bereich von Farbwerten angegeben ist, wie viele Bildelemente der Bildaufnahme (z.B. absolut oder in Relation zu der Zahl der vorhandenen Bildelemente) diesen Farbwert oder einen Farbwert innerhalb des Bereichs von Farbwerten aufweisen.

Der Bereich kann durch diejenigen Bildelemente definiert sein, die innerhalb eines Begrenzungsrahmens liegen, der das Kennzeichen einschließt.

Ein "Begrenzungsrahmen" (engl. *bounding box*) kann ein rechteckiger Rahmen sein, der durch die Koordinaten seiner Ecken definiert ist und ein Objekt von Interesse (z.B. ein Kennzeichen) in einer Bildaufnahme umschließt. Der Begrenzungsrahmen ist durch seine Position gekennzeichnet, die in der Regel durch die Koordinaten der linken oberen Ecke (x₁, y₁) und der rechten unteren Ecke (x₂, y₂) oder alternativ durch die Koordinaten des Mittelpunkts (cx, cy) zusammen mit seiner Breite (w) und Höhe (h) angegeben wird. Der Begrenzungsrahmen dient als räumliche Darstellung, die den Umfang des Objekts (z.B. des Kennzeichens) abgrenzt und seine Identifizierung und/oder Analyse ermöglicht. Begrenzungsrahmen werden häufig verwendet, um Objekte in Bildern zu markieren. Es sei darauf hingewiesen, dass ein Begrenzungsrahmen nicht unbedingt rechteckig sein muss; auch andere geometrische Formen eignen sich zur Markierung von Objekten, z. B. Kreise, Ellipsen, Sechsecke oder andere Formen. In dieser Hinsicht ist der Begriff "Begrenzungsrahmen" weit auszulegen und nicht auf rechteckige Rahmen beschränkt.

Üblicherweise wird eine Farbabweichung für einen Bereich der Bildaufnahme festgestellt (wobei der Bereich das Kennzeichen umfasst), eine Transformation (in diesem Fall eine Farbkorrektur) ermittelt, die die Abweichungen reduziert, und die Transformation dann auf die gesamte Bildaufnahme (und nicht nur auf den Bereich, der das Kennzeichen umfasst) angewandt. Dies gilt analog auch für andere Transformationen wie beispielsweise Helligkeit anpassen, Bildschärfe anpassen, Kontrast anpassen und/oder Reduzieren von Verzerrungen und/oder Verzeichnungen.

Die Abweichung zwischen dem in der Bildaufnahme abgebildeten Kennzeichen und der Referenz kann eine Helligkeit betreffen.

Es ist möglich, dass das Kennzeichen in der Bildaufnahme mit einer anderen Helligkeit (z.B. einer geringeren Helligkeit oder einer größeren Helligkeit) dargestellt ist als in der Referenz.

Das Reduzieren einer Helligkeitsabweichung kann folgendes umfassen:
- Ermitteln einer Luminanz eines Bildelements, wobei das Bildelement das Kennzeichen repräsentiert,
- Feststellen einer Abweichung der Luminanz von einer Referenzluminanz,
- Reduzieren der Abweichung durch Durchführen einer Helligkeitsanpassung bei der Bildaufnahme.

Die "Luminanz" stellt die Helligkeit einer Farbe dar und kann eine (optional gewichtete) Summe der RGB-Komponenten (Rot, Grün, Blau) jedes Bildelements sein.

Es ist möglich, dass mehrere Luminanzwerte von mehreren Bildelementen ermittelt werden.

Es ist möglich, dass mehrere ermittelte Luminanzwerte mit einem oder mehreren Referenzluminanzwerten verglichen werden, um eine oder mehrere Helligkeitsabweichungen zu identifizieren.

In dieser Ausführungsform umfasst die Transformation eine Helligkeitsanpassung.

Eine solche Helligkeitsanpassung kann beispielsweise eine Belichtungskorrektur, eine Gammakorrektur, und/oder eine andere/weitere Helligkeitsanpassung umfassen.

Bei der "Belichtungskorrektur" wird die Gesamtbelichtung angepasst. Durch eine höhere Belichtung wird die Bildaufnahme heller, durch eine niedrigere Belichtung wird die Bildaufnahme dunkler.

Die "Gammakorrektur" ist eine nichtlineare Transformation. Die Gammakorrektur wirkt sich üblicherweise auf die Mitteltöne einer Bildaufnahme aus, während die Schwarz- und Weißpunkte konstant bleiben.

Die Abweichung zwischen dem in der Bildaufnahme abgebildeten Kennzeichen und der Referenz kann eine Bildschärfe betreffen.

Es ist möglich, dass das Kennzeichen in der Bildaufnahme mit einer anderen Bildschärfe (z.B. weniger scharf oder schärfer) dargestellt ist als in der Referenz.

Das Reduzieren einer Bildschärfeabweichung kann folgendes umfassen:
- Ermitteln einer Bildschärfe eines Bereichs der Bildaufnahme, der das Kennzeichen umfasst,
- Feststellen einer Abweichung der Bildschärfe von einer Referenzbildschärfe,
- Reduzieren der Abweichung durch Durchführen einer Bildschärfeanpassung bei der Bildaufnahme.

Die "Bildschärfe" bezieht sich auf die Klarheit von Details und die Deutlichkeit von Kanten in einer Bildaufnahme.

Bildschärfe kann auf verschiedene Weisen quantifiziert werden.

Ein Ansatz besteht darin, den Kontrast an Kanten innerhalb einer Bildaufnahme zu ermitteln. Ein höherer Kontrast an den Kanten deutet in der Regel auf ein schärferes Bild hin. Dies kann durch die Anwendung von Kantenerkennungsalgorithmen (wie z.B. den Sobel- oder Canny-Operatoren) und die anschließende Messung der Gradientenstärke an diesen Kanten erfolgen.

Die Bildschärfe kann auch durch die Analyse der Bildaufnahme (oder eines Bereichs davon, der das abgebildete Kennzeichen umfasst) im Frequenzbereich nach einer Fourier-Transformation der Bildaufnahme ermittelt werden. Schärfere Bilder weisen in der Regel höhere Frequenzen auf, was auf mehr signifikante Details hinweist. Das Vorhandensein und die Stärke dieser Hochfrequenzkomponenten können quantifiziert werden, um die Bildschärfe zu ermitteln.

In dieser Ausführungsform umfasst die Transformation eine Bildschärfeanpassung.

Eine Transformation, die zu einer Änderung der Bildschärfe führt, wird allgemein als "Schärfen" (engl. *sharpening*) bezeichnet, wenn sie die Schärfe erhöht, oder als "Verwischen" oder "Weichzeichnen" (engl. *blurring*), wenn sie die Schärfe verringert.

Durch Schärfen wird der Kontrast an den Kanten innerhalb einer Bildaufnahme erhöht, wodurch die Bildaufnahme klarer und detaillierter erscheint. Dies wird in der Regel durch die Betonung der Farb- und/oder Helligkeitsunterschiede zwischen benachbarten Bildelementen erreicht. Zu den gängigen Schärfetechniken gehören Unscharfmaskierung, Hochpassfilterung, und Kantenverbesserungsalgorithmen.

Durch Weichzeichnen wird der Kontrast an den Kanten reduziert, wodurch die Bildaufnahme weicher und weniger detailliert wirkt. Zu den gängigen Weichzeichnungsverfahren gehören: Gaußsche Unschärfe, Box Blur (Averaging) und Median Blur.

Die Abweichung zwischen dem in der Bildaufnahme abgebildeten Kennzeichen und der Referenz kann einen Kontrast betreffen.

Es ist möglich, dass das Kennzeichen in der Bildaufnahme mit einem anderen Kontrast (z.B. mit weniger Kontrast oder mit mehr Kontrast) dargestellt ist als in der Referenz.

Das Reduzieren einer Kontrastabweichung kann folgendes umfassen:
- Ermitteln eines Kontrasts innerhalb eines Bereichs der Bildaufnahme, der das Kennzeichen umfasst,
- Feststellen einer Abweichung des Kontrasts von einem Referenzkontrast,
- Reduzieren der Abweichung durch Durchführen einer Kontrastanpassung bei der Bildaufnahme.

Der Kontrast in einer Bildaufnahme bezieht sich auf den Unterschied in der Luminanz und/oder Farbe, der ein Objekt (z.B. das in der Bildaufnahme abgebildete Kennzeichen) unterscheidbar macht.

Die Quantifizierung des Kontrasts umfasst üblicherweise die Messung der Farbwertverteilung in einer Bildaufnahme, von den dunkelsten Schatten bis zu den hellsten Lichtern. Zur Quantifizierung des Kontrasts können verschiedene Methoden und Messgrößen verwendet werden.

Der globale Kontrast kann durch Subtrahieren des in dem Bereich der Bildaufnahme, der das Kennzeichen umfasst, auftretenden minimalen Farbwerts vom maximalen Farbwert ermittelt werden. Dies ergibt ein grundlegendes Maß für den Kontrastumfang.

Ein weiteres Maß ist die Berechnung der Standardabweichung der Luminanzwerte aller Bildelemente in dem Bereich der Bildaufnahme, der das Kennzeichen umfasst. Eine höhere Standardabweichung deutet auf eine größere Streuung der Luminanzwerte und somit auf einen höheren Kontrast hin.

Der Michelson-Kontrast ist definiert als die Differenz zwischen den maximalen und minimalen Luminanzen geteilt durch die Summe der maximalen und minimalen Luminanzen.

Der Weber-Kontrast ist definiert als das Verhältnis der Differenz zwischen der Luminanz der Bildelemente, die das Kennzeichen repräsentieren, und der Luminanz des Hintergrunds zur Luminanz des Hintergrunds.

In dieser Ausführungsform umfasst die Transformation eine Kontrastanpassung. Üblicherweise ist die Kontrastanpassung eine Kontrasterhöhung. Es kann aber auch eine Kontrastminderung sein.

Um den Kontrast eines Bildes zu ändern, muss die Verteilung seiner Luminanzwerte und/oder Farbwerte angepasst werden, um die Unterschiede zwischen ihnen mehr oder weniger deutlich zu machen.

Bei der linearen Kontrastdehnung wird der Bereich der Luminanzwerte und/oder Farbwerte in einer Bildaufnahme neu skaliert, um beispielsweise den gesamten möglichen Bereich abzudecken (z. B. 0 bis 255 für ein 8-Bit-Bild). Dadurch können Schatten dunkler und Lichter heller werden, wodurch der Kontrast effektiv erhöht wird.

Beim Histogrammausgleich werden die Luminanzwerte und/oder Farbwerte eines Bildes neu verteilt.

Das AHE (Adaptive Histogram Equalization) Verfahren ist eine Variante des Histogrammausgleichs, bei der mehrere Histogramme berechnet werden, die bestimmten Bildabschnitten entsprechen, um den lokalen Kontrast zu verbessern und die Kantenschärfe in jedem Bildbereich zu erhöhen. Das CLAHE (Contrast Limited Adaptive Histogram Equalization) Verfahren ist eine modifizierte Version von AHE, die eine Überverstärkung von Rauschen verhindert, indem die Kontrastverstärkung begrenzt wird.

Die Abweichung zwischen dem in der Bildaufnahme abgebildeten Kennzeichen und der Referenz kann eine Verzeichnung und/oder Verzerrung betreffen.

Es ist möglich, dass das Kennzeichen in der Bildaufnahme gegenüber der Referenz verzerrt dargestellt ist. Verzerrungen können durch Unvollkommenheiten in der Kameralinse entstehen. Zu den häufigsten

Arten von Verzerrungen gehören: Tonnenverzerrung, Kissenverzerrung, chromatische Aberration und Vignettierung.

Das Reduzieren einer Verzerrung kann folgendes umfassen:
- Ermitteln einer Verzerrung auf Basis des in der Bildaufnahme abgebildeten Kennzeichens,
- Reduzieren der Verzerrung in der Bildaufnahme.

Tonnen- und kissenförmige Verzeichnungen können durch die Analyse von geraden Linien erkannt werden, die gerade erscheinen sollten, in der Bildaufnahme jedoch gekrümmt sind. Die Quantifizierung kann durch Anpassung dieser Kurven an ein mathematisches Modell (z. B. ein Polynom) und Messung der Abweichung von der Linearität erfolgen.

Chromatische Aberration kann durch die Untersuchung von Kanten innerhalb der Bildaufnahme auf Farbsäume festgestellt werden. Die Quantifizierung einer chromatischen Aberration umfasst beispielsweise die Messung der Verschiebung zwischen den Farbkanälen.

Zur Erkennung einer Vignettierung können die Helligkeitsstufen in der Bildaufnahme analysiert werden. Eine Vignettierung kann beispielsweise durch Vergleich der Helligkeit an verschiedenen Stellen der Bildaufnahme quantifiziert werden. Es kann z.B. ein radiales Helligkeitsprofil erstellt und an ein Modell angepasst werden, um den Grad des Helligkeitsabfalls zu bestimmen.

Für das Reduzieren von Verzerrungen stehen je nach Art der Verzerrung verschiedene Transformationen zu Verfügung.

In einer Ausführungsform der vorliegenden Offenbarung erfolgt das Reduzieren einer Abweichung zwischen dem in der Bildaufnahme abgebildeten Kennzeichens und der Referenz durch Transformieren der Bildaufnahme mittels eines trainierten Modells des maschinellen Lernens.

Ein "Modell des maschinellen Lernens" kann als eine computerimplementierte Datenverarbeitungsarchitektur verstanden werden. Das Modell kann Eingabedaten empfangen und Ausgabedaten auf der Grundlage dieser Eingangsdaten und Modell-Parametern liefern. Das Modell kann durch Training eine Beziehung zwischen den Eingabedaten und den Ausgabedaten erlernen. Beim Training können die Modell-Parameter angepasst werden, um eine gewünschte Ausgabe für eine bestimmte Eingabe zu liefern.

Beim Trainieren eines solchen Modells werden dem Modell Trainingsdaten präsentiert, aus denen es lernen kann. Das trainierte Modell des maschinellen Lernens ist das Ergebnis des Trainingsprozesses. Die Trainingsdaten umfassen neben Eingabedaten die korrekten Ausgabedaten (Zieldaten), die das Modell auf Basis der Eingabedaten erzeugen soll. Beim Trainieren werden Muster erkannt, die die Eingabedaten auf die Zieldaten abbilden.

Im Trainingsprozess werden die Eingabedaten der Trainingsdaten in das Modell eingegeben, und das Modell erzeugt Ausgabedaten. Die Ausgabedaten werden mit den Zieldaten (sogenannte Ground Truth Daten) verglichen. Modell-Parameter werden so verändert, dass die Abweichungen zwischen den Ausgabedaten und den Zieldaten auf ein (definiertes) Minimum reduziert werden.

Im Training kann eine Fehlerfunktion (engl.: *loss function*) verwendet werden, um die Vorhersagequalität des Modells zu bewerten. Die Fehlerfunktion kann so gewählt werden, dass sie eine erwünschte Beziehung zwischen Ausgabedaten und Zieldaten belohnt und/oder eine unerwünschte Beziehung zwischen Ausgabedaten und Zieldaten bestraft. Eine solche Beziehung kann z.B. eine Ähnlichkeit, eine Unähnlichkeit oder eine andere Beziehung sein.

Die Fehlerfunktion kann verwendet werden, um einen Fehler (engl.: loss) für ein gegebenes Paar aus Ausgabedaten und Zieldaten zu berechnen. Das Ziel des Trainingsprozesses kann darin bestehen, die Parameter des maschinellen Lernmodells so zu verändern (anzupassen), dass der Fehler für alle Paare des Trainingsdatensatzes auf ein (definiertes) Minimum reduziert wird. Dies kann in einem Optimierungsverfahren wie beispielsweise einem Gradientenverfahren erfolgen.

Die Fehlerfunktion kann z.B. die Abweichung zwischen den Ausgabedaten des Modells für bestimmte Eingabedaten und den Zieldaten quantifizieren. Handelt es sich bei den Ausgabedaten und den Zieldaten beispielsweise um Zahlen, kann die Fehlerfunktion die absolute Differenz zwischen diesen Zahlen sein. In diesem Fall kann ein hoher absoluter Wert der Fehlerfunktion bedeuten, dass ein oder mehrere Modell-Parameter in hohem Maße geändert werden müssen.

Bei Ausgabedaten in Form von Vektoren können beispielsweise Differenzmetriken zwischen Vektoren wie der mittlere quadratische Fehler, ein Kosinusabstand, eine Norm des Differenzvektors wie ein euklidischer Abstand, ein Tschebyscheff-Abstand, eine Lp-Norm eines Differenzvektors, eine gewichtete Norm oder jede andere Art von Differenzmetrik zweier Vektoren als Fehlerfunktion gewählt werden.

Bei höherdimensionalen Ausgaben, wie z.B. zweidimensionalen, dreidimensionalen oder höherdimensionalen Ausgaben, kann z. B. eine elementweise Differenzmetrik verwendet werden. Alternativ oder zusätzlich können die Ausgabedaten vor der Berechnung eines Verlustwertes transformiert werden, z.B. in einen eindimensionalen Vektor.

Das Modell des maschinellen Lernens kann trainiert sein, die von der Kamera erzeugte Bildaufnahme als Eingabedaten entgegenzunehmen und auf Basis der erzeugten Bildaufnahme, auf Basis von Modellparameter und optional auf Basis weiterer Eingabedaten eine transformierte Bildaufnahme als Ausgabedaten zu erzeugen.

Die Trainingsdaten können eine Vielzahl von Trainingsbildaufnahmen umfassen, in denen ein Sammelbereich umfassend ein Kennzeichen abgebildet sind. Zumindest eine Trainingsbildaufnahme kann beim Training als Zieldaten dienen. Bei dieser zumindest einen Trainingsbildaufnahme kann das Kennzeichen so abgebildet sein, wie es gewünscht ist, d.h. zum Beispiel ohne eine Verzerrung und/oder ohne einen Farbstich und/oder ohne einen Kontrastverlust und/oder in der gewünschten Bildschärfe und/oder in der gewünschten Helligkeit.

Die zumindest eine Trainingsbildaufnahme der Zieldaten kann eine Referenz-Bildaufnahme sein, in der das Kennzeichen naturgetreu abgebildet ist, das heißt so abgebildet ist, wie es in dem Sammelbereich z.B. unter definierten Lichtverhältnissen vorliegt.

Das Modell des maschinellen Lernens kann trainiert werden, die übrigen Trainingsbildaufnahmen (die Eingabedaten) so zu transformieren, dass sie den Zieldaten möglichst nahekommen. Ebenso ist es möglich, dass es Paare von Trainingsbildaufnahmen gibt, von denen jeweils eine Trainingsbildaufnahme als Eingabedaten dient und von dem Modell des maschinellen Lernens transformiert wird, und die jeweils andere Trainingsbildaufnahme als Zieldaten (Referenz-Bildaufnahme) dient.

Neben einer Trainingsbildaufnahme können die Eingabedaten weitere Eingabedaten umfassen, wie z.B. Informationen zu der Bildaufnahme (z.B. Histogramm oder davon abgeleitete Werte, Auflösung), Informationen über Kameraparameter beim Erzeugen der Bildaufnahme (z.B. Brennweite, Blendengröße, Belichtungszeit, ISO-Empfindlichkeit, Sensorgröße, Weißabgleich, Belichtungskorrektur), Informationen zu der Zeit, zu der die Bildaufnahme erzeugt wurde (z.B. Tageszeit und/oder Jahreszeit, Datum, Uhrzeit), Informationen zum Ort, an dem die Bildaufnahme erzeugt wurde (z.B. Positionsinformationen (z.B. Geodaten) zur Position der Vorrichtung), Informationen über den Sammelbereich (z.B. Typ des Sammelbereichs (z.B. Fangschale, Art der Flüssigkeit in der Fangschale, Klebefalle, Farbe des Sammelbereichs) und/oder andere/weitere Informationen).

Das Training des Modells des maschinellen Lernens kann umfassen:
- Eingeben der Eingabedaten in das Modell des maschinellen Lernens,
- Empfangen von Ausgabedaten von dem Modell des maschinellen Lernens,
- Reduzieren von Abweichungen zwischen den Ausgabedaten und den Zieldaten durch Modifizieren der Modellparameter.

Die Ausgabedaten umfassen eine transformierte Trainingsbildaufnahme.

Das Training des Modells des maschinellen Lernens kann beendet werden, wenn ein Stoppkriterium erfüllt ist. Ein solches Stoppkriterium kann beispielsweise sein: eine vordefinierte maximale Anzahl von Trainingsschritten/-zyklen/-epochen wurde durchgeführt, Abweichungen zwischen Ausgabedaten und Zieldaten können nicht mehr durch Änderung der Modellparameter reduziert werden und/oder ein vorab festgelegtes Minimum der Fehlerfunktion wurde erreicht.

Das trainierte Modell des maschinellen Lernens kann gespeichert, auf ein separates Computersystem übertragen und/oder zur Erzeugung einer transformierten Bildaufnahme verwendet werden.

Das trainierte Modell des maschinellen Lernens kann verwendet werden, um eine Abweichung eines in einer Bildaufnahme abgebildeten Kennzeichens von einer Referenz zu reduzieren.

Das Modell des maschinellen Lernens kann beispielsweise ein künstliches neuronales Netzwerk sein oder ein solches umfassen. Das Modell des maschinellen Lernens kann beispielsweise ein Faltungsnetzwerk (engl. *Convolutional Neural Network*, CNN) sein oder ein solches umfassen. Das Modell des maschinellen Lernens kann beispielsweise die Architektur eines Autoencoders aufweisen oder einen Autoencoder umfassen. Das Modell des maschinellen Lernens kann ein generatives gegnerisches Netzwerk (engl. *Generative Adversarial Networks, GAN*) sein oder ein solches umfassen.

In einem weiteren Schritt wird die transformierte Bildaufnahme gespeichert und/oder an ein separates Computersystem übermittelt und/oder einer Analyse zugeführt, um Gliederfüßer in der transformierten Bildaufnahme zu erkennen, zu lokalisieren, zu identifizieren und/oder zu zählen.

Das Erkennen, Lokalisieren, Identifizieren und/oder Zählen von Gliederfüßern in der transformierten Bildaufnahme kann mittels der Vorrichtung der vorliegenden Offenbarung erfolgen. Das Erkennen, Lokalisieren, Identifizieren und/oder Zählen von Gliederfüßern in der transformierten Bildaufnahme kann mittels des separaten Computersystems erfolgen.

Die transformierte Bildaufnahme weist gegenüber der Bildaufnahme, auf deren Basis sie erzeugt wurde, weniger Verzerrungen, eine höhere Bildschärfe, einen höheren Kontrast, eine gleichmäßigere Helligkeitsverteilung, keinen oder einen reduzierten Farbstich und/oder andere/weitere Vorteile auf, die das Erkennen, Lokalisieren, Identifizieren und/oder Zählen von Gliederfüßern in der transformierten Bildaufnahme erleichtern. Die transformierte Bildaufnahme zeigt den Sammelbereich naturgetreu oder kommt einer naturgetreuen Abbildung zumindest näher als die von der Kamera erzeugte Bildaufnahme.

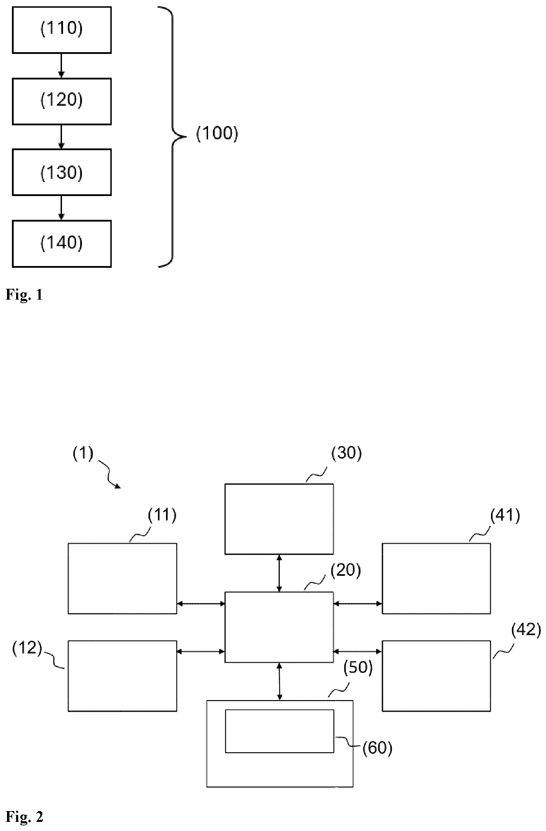

Fig. 1 zeigt beispielhaft und schematisch eine Ausführungsform des computer-implementierten Verfahrens der vorliegenden Offenbarung in Form eines Ablaufschemas.

Das Verfahren (100) umfasst die Schritte:
(110) Empfangen einer Bildaufnahme, wobei die Bildaufnahme einen Sammelbereich für Gliederfüßer zeigt, wobei der Sammelbereich ein Kennzeichen umfasst,
(120) Reduzieren einer Abweichung zwischen dem in der Bildaufnahme abgebildeten Kennzeichen und einer Referenz durch Transformieren der Bildaufnahme,
(130) Speichern der transformierten Bildaufnahme und/oder Übermitteln der transformierten Bildaufnahme an ein separates Computersystem und/oder Erkennen, Lokalisieren, Identifizieren und/oder Zählen von Gliederfüßern in der transformierten Bildaufnahme.

Ein weiterer Gegenstand der vorliegenden Offenbarung ist eine Vorrichtung zum Überwachen von Gliederfüßern.

Die Vorrichtung umfasst eine oder mehrere Kameras.

Die mindestens eine Kamera ist so ausgerichtet, dass sie Bildaufnahmen von einem Sammelbereich für Gliederfüßer erzeugen kann. Mit anderen Worten: die mindestens eine Kamera ist so ausgerichtet, dass ein Abbild des Sammelbereichs oder eines Teils davon auf einen Bildsensor der mindestens einen Kamera fällt.

Der Sammelbereich kann ein Bestandteil der Vorrichtung sein, Der Sammelbereich kann ein Bestandteil einer Fangvorrichtung für Gliederfüßer sein. Die Fangvorrichtung kann ein Bestandteil der Vorrichtung oder eine separate Einheit sein.

Der Sammelbereich umfasst mindestens ein Kennzeichen, wie in dieser Offenbarung beschrieben.

Die Vorrichtung umfasst eine Steuereinheit. Die Steuereinheit ist konfiguriert,
- die Kamera zu veranlassen eine Bildaufnahme zu erzeugen, wobei die Bildaufnahme einen Sammelbereich für Gliederfüßer zeigt, wobei der Sammelbereich ein Kennzeichen umfasst,
- eine Abweichung zwischen dem in der Bildaufnahme abgebildeten Kennzeichen und einer Referenz durch Transformieren der Bildaufnahme zu reduzieren,
- die transformierte Bildaufnahme zu speichern und/oder an ein separates Computersystem zu übermitteln und/oder Gliederfüßer in der transformierten zu erkennen, zu lokalisieren, zu identifizieren und/oder zu zählen.

Die Steuereinheit dient ferner der Steuerung der elektrischen/elektronischen Komponenten der Vorrichtung und/oder zum Verarbeiten von Signalen und/oder Daten. Die Steuereinheit umfasst üblicherweise eine Prozessoreinheit, einen Programmspeicher und einen Arbeitsspeicher. Die Steuereinheit kann ferner einen nicht-flüchtigen Datenspeicher umfassen, der beispielsweise als Halbleiterspeicher ausgeführt ist, und der zum Beispiel zum Speichern von Bildaufnahmen, Messwerten, Modellen und/oder von Ergebnissen von Analysen dienen kann. Die Steuereinheit kann konfiguriert sein, die Kamera zu definierten Zeitpunkten und/oder in definierten Zeitabständen und/oder bei Eintreten definierter Ereignisse zu veranlassen, eine Bildaufnahme vom Sammelbereich zu erzeugen. Die Steuereinheit kann konfiguriert sein, Bildaufnahmen, Messwerte, Analysenergebnisse, Geokoordinaten und/oder andere Informationen mit Hilfe einer Sendeeinheit an ein separates Computersystem zu übermitteln. Die Steuereinheit kann konfiguriert sein, Bildaufnahmen von der Kamera zu empfangen und/oder Bildaufnahmen von der Kamera abzurufen und/oder Bildaufnahmen aus einem Datenspeicher, der ein Bestandteil der Vorrichtung sein kann, auszulesen.

Die Steuereinheit kann konfiguriert sein, in (z.B. transformierten) Bildaufnahmen abgebildete Gliederfüßer zu detektieren, zu lokalisieren, zu zählen und/oder zu identifizieren. Dies kann z.B. mit Hilfe eines trainierten Modells des maschinellen Lernens erfolgen. Ein solches Modell des maschinellen Lernens kann konfiguriert und trainiert sein, in (z.B. transformierten) Bildaufnahmen abgebildete Gliederfüßer zu detektieren, zu lokalisieren, zu zählen und/oder zu identifizieren. Details zum automatisierten Detektieren, Lokalisieren, Zählen und/oder Identifizieren von Gliederfüßer in Bildaufnahmen sind in Veröffentlichungen zu diesem Thema beschrieben (siehe z.B.: D. C. K. Amarathunga et al.: Methods of Insect Image Capture and Classification: A Systematic Literature Review, Smart Agricultural Technology, Volume 1, 2021, 100023; C. Zhu et al.: Insect Identification and Counting in Stored Grain: Image Processing Approach and Application Embedded in Smartphones, Mob. Inf. Syst. 2018, 5491706:1-5, WO2020058175A1, WO2020058170A1).

Die Vorrichtung kann eine Sendeeinheit umfassen, um Informationen über ein Netzwerk an ein separates Computersystem zu übermitteln. Diese Informationen können beispielsweise transformierte Bildaufnahmen des Sammelbereichs sein. Diese Informationen können Ergebnisse einer Analyse einer transformierten Bildaufnahme sein, zum Beispiel die Zahl der in einer transformierten Bildaufnahme abgebildeten Gliederfüßer, identifizierte Spezies und/oder Mitteilungen zum Status der Vorrichtung.

Die Sendeeinheit kann so ausgestaltet sein, dass sie Informationen über ein Mobilfunknetz (z.B. GSM: *Global System for Mobile Communications*, GPRS: *General Packet Radio Service*; UMTS: *Universal Mobile Telecommunications System*, LTE: *Long Term Evolution*), über ein WLAN (*Wireless Local Artea Network*), über Bluetooth, über DECT (*Digital Enhanced Cordless Telecommunications*) über ein Low-Power-Wide-Area-Netzwerk (*Low Power Wide Area Network* (LPWAN oder LPN)) wie beispielsweise ein NarrowBand IoT Netzwerk und/oder über eine Kombination aus verschiedenen Übertragungswegen übermittelt.

Die Sendeeinheit kann so ausgestaltet sein, dass sie Informationen über eine kurzreichweitige Funkverbindung (z.B. Bluetooth) an eine Basisstation übermittelt, von der die Informationen dann kabelgebunden und/oder über eine langreichweitige Funkverbindung (z.B. ein Mobilfunknetz) weitergeleitet werden.

In einer Ausführungsform der vorliegenden Offenbarung umfasst die Sendeeinheit ein Modem und eine Antenne zum Versenden von Informationen über ein GSM-, GPRS-, 2G-, 3G-, LTE-, 4G-, 5G-, 6G-Mobilfunknetzwerk oder über ein anderes Mobilfunknetzwerk.

Die Vorrichtung kann Mittel zur Energieversorgung aufweisen. In einer Ausführungsform der vorliegenden Offenbarung ist die Vorrichtung ist für einen autonomen Betrieb im Freien für einen Zeitraum von mehreren Tagen, Wochen, Monaten oder sogar Jahren hergerichtet. Die Mittel zur Energieversorgung umfassen z.B. eine oder mehrere elektrochemischen Zellen, Akkumulatoren, Solarzellen, Brennstoffzellen und/oder Generatoren (z.B. in Kombination mit einem Windrad).

Die Vorrichtung kann so ausgestaltet sein, dass sie elektrische Energie aus der Umgebung der Vorrichtung gewinnt. Die Energie aus der Umgebung kann beispielsweise in Form von Licht, elektrischen Feldern, magnetischen Feldern, elektromagnetischen Felder, Bewegung, Druck und/oder Wärme und/oder anderen Energieformen bereitgestellt und durch die Vorrichtung genutzt oder "geerntet" werden. Diese Art der elektrischen Energieerzeugung ist als Energy Harvesting bekannt. Mit "Energy Harvesting" werden im Bereich der Elektronik Verfahren bezeichnet, mit denen kleinste Mengen frei verfügbarer Energie aus der Umgebung gewonnen und gespeichert werden können. Diese Technik ermöglicht es, eine Vorrichtung während ihrer gesamten Lebensdauer mit Energie zu versorgen. Energy Harvesting Systeme umfassen üblicherweise einen Energiewandler, eine Energiemanagementeinheit mit einem Energiespeicher, der üblicherweise ein Kondensator ist. Der Energiewandler, auch Mikrogenerator genannt, wandelt Energie aus der Umgebung in elektrische Energie um. Für die Umwandlung können beispielsweise der piezoelektrische Effekt, der thermoelektrische Effekt oder der photoelektrische Effekt genutzt werden. Weitere Details sind im Stand der Technik beschrieben (siehe z.B. http://www.harvesting-energy.de/ und die dort aufgeführten Publikationen).

In einer Ausführungsform umfasst die Vorrichtung eine oder mehrere Solarzellen und einen oder mehrere Akkumulatoren zur Energieversorgung. Die mindestens eine Solarzelle und der mindestens eine Akkumulator sind so miteinander verbunden, dass die Solarzelle den Akkumulator auflädt, wenn elektromagnetische Strahlung (z.B. Sonnenlicht) auf die mindestens eine Solarzelle trifft.

Zur Abbildung des Sammelbereichs umfassend mindestens ein Kennzeichen auf einem oder mehreren Bildsensoren ist eine Lichtquelle erforderlich, mit der der Sammelbereich beleuchtet wird, so dass Licht (elektromagnetische Strahlung im infraroten, sichtbaren und/oder ultravioletten Bereich des Spektrums) vom beleuchteten Sammelbereich in Richtung Kamera gestreut/reflektiert wird. Hierzu kann das Tageslicht verwendet werden. Es ist aber auch denkbar, eine Beleuchtungseinheit zu verwenden, die für eine definierte, vom Tageslicht unabhängige Beleuchtung sorgt. Diese ist vorzugsweise seitlich neben der Kamera angebracht, so dass es zu keinem Schattenwurf der Kamera auf den Sammelbereich kommt.

Es ist auch denkbar, eine Beleuchtungsquelle unterhalb des Sammelbereichs und/oder neben dem Sammelbereich zu positionieren, die den Sammelbereich "von unten" und/oder "von der Seite" beleuchtet, während eine Kamera eine oder mehrere Bildaufnahmen "von oben" erzeugt.

Es denkbar, dass mehrere Beleuchtungsquellen den Sammelbereich aus unterschiedlichen Richtungen beleuchten.

Der Begriff "Licht" und "Beleuchtung" soll im Übrigen nicht bedeuten, dass der Spektralbereich auf sichtbares Licht (etwa 380 nm bis etwa 780 nm) beschränkt ist. Es ist ebenso denkbar, dass zur Beleuchtung elektromagnetische Strahlung mit einer Wellenlänge unterhalb von 380 nm (ultraviolettes Licht: 100 nm bis 380 nm) oder oberhalb von 780 nm (infrarotes Licht: 780 nm bis 1000 µm) verwendet wird. Der Bildsensor und die optischen Elemente sind üblicherweise an die verwendete elektromagnetische Strahlung angepasst.

Fig. 2 zeigt beispielhaft und schematisch eine Ausführungsform der Vorrichtung der vorliegenden Offenbarung.

Die Vorrichtung (1) umfasst eine Verarbeitungseinheit (20) (engl. *processing unit*) und einen Speicher (50).

Die Verarbeitungseinheit (20) kann einen oder mehrere Prozessoren allein oder in Kombination mit einem oder mehreren Speichern umfassen. Bei der Verarbeitungseinheit (20) kann es sich um gewöhnliche Computerhardware handeln, die in der Lage ist, Informationen wie z.B. digitale Bildaufnahmen, Computerprogramme und/oder andere digitale Informationen zu verarbeiten. Die Verarbeitungseinheit (20) besteht üblicherweise aus einer Anordnung elektronischer Schaltungen, von denen einige als integrierter Schaltkreis oder als mehrere miteinander verbundene integrierte Schaltkreise (ein integrierter Schaltkreis wird manchmal auch als "Chip" bezeichnet) ausgeführt sein können. Die Verarbeitungseinheit (20) kann konfiguriert sein, Computerprogramme auszuführen, die im Speicher (50) gespeichert sein können.

Der Speicher (50) kann eine gewöhnliche Computerhardware sein, die in der Lage ist, Informationen wie z.B. digitale Bildaufnahmen (z.B. Repräsentationen des Untersuchungsbereichs), Daten, Computerprogramme und/oder andere digitale Informationen entweder vorübergehend und/oder dauerhaft zu speichern. Der Speicher (50) kann einen flüchtigen und/oder nichtflüchtigen Speicher umfassen und kann fest eingebaut oder entfernbar sein. Beispiele für geeignete Speicher sind RAM (Random Access Memory), ROM (Read-Only Memory), eine Festplatte, ein Flash-Speicher oder eine Kombination der oben genannten.

Zusätzlich zum Speicher (50) kann die Verarbeitungseinheit (20) auch mit einer oder mehreren Schnittstellen (11, 12, 30, 41, 42) verbunden sein, um Informationen anzuzeigen, zu übertragen und/oder zu empfangen. Die Schnittstellen können eine oder mehrere Kommunikationsschnittstellen (41, 42) und/oder eine oder mehrere Benutzerschnittstellen (11, 12, 30) umfassen. Die eine oder mehrere Kommunikationsschnittstellen (41, 42) können so konfiguriert sein, dass sie Informationen senden und/oder empfangen, z.B. zu und/oder von einer Kamera, anderen Computersystemen, Netzwerken, Datenspeichern oder dergleichen. Die eine oder mehrere Kommunikationsschnittstellen (41, 42) können so konfiguriert sein, dass sie Informationen über physische (verdrahtete) und/oder drahtlose Kommunikationsverbindungen übertragen und/oder empfangen. Die eine oder die mehreren Kommunikationsschnittstellen (41, 42) können eine oder mehrere Schnittstellen für die Verbindung mit einem Netzwerk enthalten, z.B. unter Verwendung von Technologien wie Mobiltelefon, Wi-Fi, Satellit, Kabel, DSL, Glasfaser und/oder dergleichen. In einigen Beispielen können die eine oder die mehreren Kommunikationsschnittstellen (41, 42) eine oder mehrere Nahbereichskommunikationsschnittstellen umfassen, die so konfiguriert sind, dass sie Geräte mit Nahbereichskommunikationstechnologien wie NFC, RFID, Bluetooth, Bluetooth LE, ZigBee, Infrarot (z. B. IrDA) oder Ähnlichem verbinden.

Die Benutzerschnittstellen (11, 12, 30) können eine Anzeige (30) umfassen. Eine Anzeige (30) kann so konfiguriert sein, dass sie einem Benutzer Informationen anzeigt. Geeignete Beispiele hierfür sind eine Flüssigkristallanzeige (LCD), eine Leuchtdiodenanzeige (LED), ein Plasmabildschirm (PDP) oder Ähnliches. Die Benutzereingabeschnittstelle(n) (11, 12) kann/können verdrahtet oder drahtlos sein und kann/können so konfiguriert sein, dass sie Informationen von einem Benutzer in das Computersystem (1) empfängt/empfangen, z.B. zur Verarbeitung, Speicherung und/oder Anzeige. Geeignete Beispiele für Benutzereingabeschnittstellen (11, 12) sind ein Mikrofon, ein Bild- oder Videoaufnahmegerät (z.B. eine Kamera), eine Tastatur oder ein Tastenfeld, ein Joystick, eine berührungsempfindliche Oberfläche (getrennt von einem Touchscreen oder darin integriert) oder ähnliches. In einigen Beispielen können die Benutzerschnittstellen eine automatische Identifikations- und Datenerfassungstechnologie (AIDC) für maschinenlesbare Informationen enthalten. Dazu können Barcodes, Radiofrequenz-Identifikation (RFID), Magnetstreifen, optische Zeichenerkennung (OCR), Karten mit integrierten Schaltkreisen (ICC) und ähnliches gehören. Die Benutzerschnittstellen können ferner eine oder mehrere Schnittstellen für die Kommunikation mit Peripheriegeräten wie Druckern und/oder Kameras und dergleichen umfassen.

Ein oder mehrere Computerprogramme (60) können im Speicher (50) gespeichert sein und von der Verarbeitungseinheit (20) ausgeführt werden, die dadurch programmiert wird, die in dieser Beschreibung beschriebenen Funktionen zu erfüllen. Das Abrufen, Laden und Ausführen von Anweisungen des Computerprogramms (60) kann sequenziell erfolgen, so dass jeweils ein Befehl abgerufen, geladen und ausgeführt wird. Das Abrufen, Laden und/oder Ausführen kann aber auch parallel erfolgen.

Die Vorrichtung kann ein Computersystem in Form eines Laptops, Notebooks, Netbooks und/der Tablet-PCs oder Smartphones sein oder ein solches umfassen; die Vorrichtung kann auch ein Bestandteil einer Kamera sein. Ebenso können eine oder mehrere Kameras Bestandteil der Vorrichtung sein.

In einer Ausführungsform der vorliegenden Offenbarung umfasst die Vorrichtung eine Fangvorrichtung für Gliederfüßer oder spezifische Gliederfüßer. In einer Ausführungsform der vorliegenden Offenbarung umfasst die Fangvorrichtung den Sammelbereich. In einer Ausführungsform der vorliegenden Offenbarung umfasst die Kamera mindestens einen Kamerasensor auf den der Sammelbereich (z.B. durch eine Kameraoptik, die ein Bestandteil der Vorrichtung sein kann) abgebildet wird.

Gegenstand der vorliegenden Erfindung ist auch ein Computerprogramm. Ein solches Computerprogramm kann auf einem nichtflüchtigen Datenträger wie beispielsweise einer CD, einer DVD, einem USB-Stick oder einem anderen Medium zum Speichern von Daten gespeichert sein.

Das Computerprogramm kann in einem App-Store und/oder auf einer Webseite des Internets zum Herunterladen angeboten werden.

Das Computerprogramm kann in den Speicher der Vorrichtung der vorliegenden Offenbarung geladen werden und/oder dort bereits gespeichert sein und die Vorrichtung dazu veranlassen, folgende Schritte ausführen:
- Empfangen einer Bildaufnahme, wobei die Bildaufnahme einen Sammelbereich für Gliederfüßer zeigt, wobei der Sammelbereich ein Kennzeichen umfasst,
- Reduzieren einer Abweichung zwischen dem in der Bildaufnahme abgebildeten Kennzeichen und einer Referenz durch Transformieren der Bildaufnahme,
- Speichern der transformierten Bildaufnahme und/oder Übermitteln der transformierten Bildaufnahme an ein separates Computersystem und/oder Erkennen, Lokalisieren, Identifizieren und/oder Zählen von Gliederfüßern in der transformierten Bildaufnahme.

## Patentansprüche

1. Computer-implementiertes Verfahren (100) umfassend:
- Empfangen einer Bildaufnahme, wobei die Bildaufnahme einen Sammelbereich für Gliederfüßer zeigt, wobei der Sammelbereich ein Kennzeichen umfasst,
- Reduzieren einer Abweichung zwischen dem in der Bildaufnahme abgebildeten Kennzeichen und einer Referenz durch Transformieren der Bildaufnahme,
- Speichern der transformierten Bildaufnahme und/oder Übermitteln der transformierten Bildaufnahme an ein separates Computersystem und Erkennen, Lokalisieren, Identifizieren und/oder Zählen von Gliederfüßern in der transformierten Bildaufnahme,
wobei das Kennzeichen eine Form, eine Farbe, eine Struktur, eine Textur, ein Muster, eine Schraffur, ein Zeichen, ein Code und/oder ein anderes sichtbares Merkmal ist oder umfasst,
**dadurch gekennzeichnet, dass** das Reduzieren der
Abweichung umfasst:
- Eingeben der Bildaufnahme in ein trainiertes Modell des maschinellen Lernens, wobei das Modell des maschinellen Lernens konfiguriert ist, auf Basis der Bildaufnahme und auf Basis von Modellparametern eine transformierte Bildaufnahme zu erzeugen, wobei das Modell des maschinellen Lernens auf Basis von Trainingsdaten trainiert wurde, wobei die Trainingsdaten Eingabedaten und Zieldaten umfassen, wobei die Eingabedaten Trainingsbildaufnahmen umfassen, wobei die Zieldaten mindestens eine Trainingsbildaufnahme umfassen, wobei jede Trainingsbildaufnahme einen Sammelbereich umfassend das Kennzeichen zeigt, wobei das Trainieren des Modells des maschinellen Lernens umfasst:
o Eingeben der Eingabedaten in das Modell des maschinellen Lernens,
o Empfangen von Ausgabedaten von dem Modell des maschinellen Lernens,
o Reduzieren einer Abweichung zwischen den Ausgabedaten und den Zieldaten durch Modifizieren der Modellparameter,
- Empfangen einer transformierten Bildaufnahme von dem trainierten Modell des maschinellen Lernens.

2. Verfahren gemäß Anspruch 1, wobei das Kennzeichen eine Form des Sammelbereichs ist oder umfasst.

3. Verfahren gemäß einem der Ansprüche 1 oder 2, wobei das Kennzeichen durch Eingravieren, Einätzen, Einbrennen, Einprägen, Aufdrucken, Aufkleben und/oder Lasern in den Sammelbereich eingebracht und/oder auf den Sammelbereich aufgebracht wurde.

4. Verfahren gemäß einem der Ansprüche 1 bis 3, wobei der Sammelbereich ein Bestandteil einer Fangvorrichtung für Gliederfüßer ist.

5. Vorrichtung (1) zum Überwachen von Gliederfüßern umfassend
- eine Kamera und
- eine Steuereinheit,
wobei die Steuereinheit konfiguriert ist,
- die Kamera zu veranlassen eine Bildaufnahme zu erzeugen, wobei die Bildaufnahme einen Sammelbereich für Gliederfüßer zeigt, wobei der Sammelbereich ein Kennzeichen umfasst,
- eine Abweichung zwischen dem in der Bildaufnahme abgebildeten Kennzeichen und einer Referenz durch Transformieren der Bildaufnahme zu reduzieren,
- Gliederfüßer in der transformierten Bildaufnahme zu erkennen, zu lokalisieren, zu identifizieren und/oder zu zählen,
wobei das Kennzeichen eine Form, eine Farbe, eine Struktur, eine Textur, ein Muster, eine Schraffur, ein Zeichen, ein Code und/oder ein anderes sichtbares Merkmal ist oder umfasst,
**dadurch gekennzeichnet, dass** das Reduzieren der
Abweichung umfasst:
- Eingeben der Bildaufnahme in ein trainiertes Modell des maschinellen Lernens, wobei das Modell des maschinellen Lernens konfiguriert ist, auf Basis der Bildaufnahme und auf Basis von Modellparametern eine transformierte Bildaufnahme zu erzeugen, wobei das Modell des maschinellen Lernens auf Basis von Trainingsdaten trainiert wurde, wobei die Trainingsdaten Eingabedaten und Zieldaten umfassen, wobei die Eingabedaten Trainingsbildaufnahmen umfassen, wobei die Zieldaten mindestens eine Trainingsbildaufnahme umfassen, wobei jede Trainingsbildaufnahme einen Sammelbereich umfassend das Kennzeichen zeigt, wobei das Trainieren des Modells des maschinellen Lernens umfasst:
o Eingeben der Eingabedaten in das Modell des maschinellen Lernens,
∘ Empfangen von Ausgabedaten von dem Modell des maschinellen Lernens,
o Reduzieren einer Abweichung zwischen den Ausgabedaten und den Zieldaten durch Modifizieren der Modellparameter,
- Empfangen einer transformierten Bildaufnahme von dem trainierten Modell des maschinellen Lernens.

6. Vorrichtung (1) gemäß Anspruch 5, ferner umfassend eine Fangvorrichtung für Gliederfüßer, wobei der Sammelbereich ein Bestandteil der Fangvorrichtung ist.

7. Nicht-flüchtiges computerlesbares Speichermedium, auf dem ein Computerprogramm gespeichert ist, das, wenn es von einer Steuereinheit einer Vorrichtung (1) zum Überwachen von Gliederfüßern ausgeführt wird, die Steuereinheit veranlasst folgende Schritte auszuführen:
- Empfangen einer Bildaufnahme, wobei die Bildaufnahme einen Sammelbereich für Gliederfüßer zeigt, wobei der Sammelbereich ein Kennzeichen umfasst,
- Reduzieren einer Abweichung zwischen dem in der Bildaufnahme abgebildeten Kennzeichen und einer Referenz durch Transformieren der Bildaufnahme,
- Speichern der transformierten Bildaufnahme und/oder Übermitteln der transformierten Bildaufnahme an ein separates Computersystem und Erkennen, Lokalisieren, Identifizieren und/oder Zählen von Gliederfüßern in der transformierten Bildaufnahme,
wobei das Kennzeichen eine Form, eine Farbe, eine Struktur, eine Textur, ein Muster, eine Schraffur, ein Zeichen, ein Code und/oder ein anderes sichtbares Merkmal ist oder umfasst,
**dadurch gekennzeichnet, dass** das Reduzieren der
Abweichung umfasst:
- Eingeben der Bildaufnahme in ein trainiertes Modell des maschinellen Lernens, wobei das Modell des maschinellen Lernens konfiguriert ist, auf Basis der Bildaufnahme und auf Basis von Modellparametern eine transformierte Bildaufnahme zu erzeugen, wobei das Modell des maschinellen Lernens auf Basis von Trainingsdaten trainiert wurde, wobei die Trainingsdaten Eingabedaten und Zieldaten umfassen, wobei die Eingabedaten Trainingsbildaufnahmen umfassen, wobei die Zieldaten mindestens eine Trainingsbildaufnahme umfassen, wobei jede Trainingsbildaufnahme einen Sammelbereich umfassend das Kennzeichen zeigt, wobei das Trainieren des Modells des maschinellen Lernens umfasst:
∘ Eingeben der Eingabedaten in das Modell des maschinellen Lernens,
o Empfangen von Ausgabedaten von dem Modell des maschinellen Lernens,
∘ Reduzieren einer Abweichung zwischen den Ausgabedaten und den Zieldaten durch Modifizieren der Modellparameter,
- Empfangen einer transformierten Bildaufnahme von dem trainierten Modell des maschinellen Lernens.

## Claims

1. Computer-implemented method (100) comprising:
• receiving an image, the image showing a collection area for arthropods, the collection area comprising an identifier,
• reducing a deviation between the identifier depicted in the image and a reference by transforming the image,
• storing the transformed image and/or transmitting the transformed image to a separate computer system and recognizing, localizing, identifying and/or counting arthropods in the transformed image,
wherein the identifier is or comprises a shape, a color, a structure, a texture, a pattern, a hatching, a sign, a code and/or another visible feature,
**characterized in that** the reducing of the deviation comprises:
• inputting the image into a trained machine learning model, the machine learning model being configured to generate a transformed image based on the image and based on model parameters, the machine learning model having been trained based on training data, the training data comprising input data and target data, the input data comprising training images, the target data comprising at least one training image, each training image showing a collection area comprising the identifier, the training of the machine learning model comprising:
• inputting the input data into the machine learning model,
• receiving output data from the machine learning model,
• reducing a deviation between the output data and the target data by modifying the model parameters,
• receiving a transformed image from the trained machine learning model.

2. Method according to claim 1, wherein the identifier is or comprises a shape of the collection area.

3. Method according to one of claims 1 or 2, wherein the identifier was introduced into the collection area and/or applied onto the collection area by engraving, etching, burning in, embossing, printing on, adhering and/or lasering.

4. Method according to one of claims 1 to 3, wherein the collection area is a component of a trapping device for arthropods.

5. Device (1) for monitoring arthropods comprising
• a camera and
• a control unit,
wherein the control unit is configured to
• cause the camera to generate an image, the image showing a collection area for arthropods, the collection area comprising an identifier,
• reduce a deviation between the identifier depicted in the image and a reference by transforming the image,
• recognize, localize, identify and/or count arthropods in the transformed image,
wherein the identifier is or comprises a shape, a color, a structure, a texture, a pattern, a hatching, a sign, a code and/or another visible feature,
**characterized in that** the reducing of the deviation comprises:
• inputting the image into a trained machine learning model, the machine learning model being configured to generate a transformed image based on the image and based on model parameters, the machine learning model having been trained based on training data, the training data comprising input data and target data, the input data comprising training images, the target data comprising at least one training image, each training image showing a collection area comprising the identifier, the training of the machine learning model comprising:
• inputting the input data into the machine learning model,
• receiving output data from the machine learning model,
• reducing a deviation between the output data and the target data by modifying the model parameters,
• receiving a transformed image from the trained machine learning model.

6. Device (1) according to claim 5, further comprising a trapping device for arthropods, the collection area being a component of the trapping device.

7. Non-volatile computer-readable storage medium on which a computer program is stored which, when executed by a control unit of a device (1) for monitoring arthropods, causes the control unit to execute the following steps:
• receiving an image, the image showing a collection area for arthropods, the collection area comprising an identifier,
• reducing a deviation between the identifier depicted in the image and a reference by transforming the image,
• storing the transformed image and/or transmitting the transformed image to a separate computer system and recognizing, localizing, identifying and/or counting arthropods in the transformed image,
wherein the identifier is or comprises a shape, a color, a structure, a texture, a pattern, a hatching, a sign, a code and/or another visible feature,
**characterized in that** the reducing of the deviation comprises:
• inputting the image into a trained machine learning model, the machine learning model being configured to generate a transformed image based on the image and based on model parameters, the machine learning model having been trained based on training data, the training data comprising input data and target data, the input data comprising training images, the target data comprising at least one training image, each training image showing a collection area comprising the identifier, the training of the machine learning model comprising:
• inputting the input data into the machine learning model,
• receiving output data from the machine learning model,
• reducing a deviation between the output data and the target data by modifying the model parameters,
• receiving a transformed image from the trained machine learning model.

## Revendications

1. Procédé mis en œuvre par ordinateur (100) comprenant :
• la réception d'une image, l'image montrant une zone de collecte pour arthropodes, la zone de collecte comprenant un identifiant,
• la réduction d'un écart entre l'identifiant représenté dans l'image et une référence par transformation de l'image,
• le stockage de l'image transformée et/ou la transmission de l'image transformée à un système informatique séparé et la reconnaissance, la localisation, l'identification et/ou le comptage d'arthropodes dans l'image transformée,
dans lequel l'identifiant est ou comprend une forme, une couleur, une structure, une texture, un motif, un hachurage, un signe, un code et/ou une autre caractéristique visible,
**caractérisé en ce que** la réduction de l'écart comprend :
• l'entrée de l'image dans un modèle d'apprentissage automatique entraîné, le modèle d'apprentissage automatique étant configuré pour générer une image transformée sur la base de l'image et sur la base de paramètres du modèle, le modèle d'apprentissage automatique ayant été entraîné sur la base de données d'entraînement, les données d'entraînement comprenant des données d'entrée et des données cibles, les données d'entrée comprenant des images d'entraînement, les données cibles comprenant au moins une image d'entraînement, chaque image d'entraînement montrant une zone de collecte comprenant l'identifiant, l'entraînement du modèle d'apprentissage automatique comprenant :
• l'entrée des données d'entrée dans le modèle d'apprentissage automatique,
• la réception de données de sortie du modèle d'apprentissage automatique,
• la réduction d'un écart entre les données de sortie et les données cibles par modification des paramètres du modèle,
• la réception d'une image transformée du modèle d'apprentissage automatique entraîné.

2. Procédé selon la revendication 1, dans lequel l'identifiant est ou comprend une forme de la zone de collecte.

3. Procédé selon l'une des revendications 1 ou 2, dans lequel l'identifiant a été introduit dans la zone de collecte et/ou appliqué sur la zone de collecte par gravure, gravure à l'eau-forte, marquage au feu, estampage, impression, collage et/ou marquage au laser.

4. Procédé selon l'une des revendications 1 à 3, dans lequel la zone de collecte est un composant d'un dispositif de piégeage pour arthropodes.

5. Dispositif (1) de surveillance d'arthropodes comprenant
• une caméra et
• une unité de commande,
dans lequel l'unité de commande est configurée pour
• amener la caméra à générer une image, l'image montrant une zone de collecte pour arthropodes, la zone de collecte comprenant un identifiant,
• réduire un écart entre l'identifiant représenté dans l'image et une référence par transformation de l'image,
• reconnaître, localiser, identifier et/ou compter des arthropodes dans l'image transformée,
dans lequel l'identifiant est ou comprend une forme, une couleur, une structure, une texture, un motif, un hachurage, un signe, un code et/ou une autre caractéristique visible,
**caractérisé en ce que** la réduction de l'écart comprend :
• l'entrée de l'image dans un modèle d'apprentissage automatique entraîné, le modèle d'apprentissage automatique étant configuré pour générer une image transformée sur la base de l'image et sur la base de paramètres du modèle, le modèle d'apprentissage automatique ayant été entraîné sur la base de données d'entraînement, les données d'entraînement comprenant des données d'entrée et des données cibles, les données d'entrée comprenant des images d'entraînement, les données cibles comprenant au moins une image d'entraînement, chaque image d'entraînement montrant une zone de collecte comprenant l'identifiant, l'entraînement du modèle d'apprentissage automatique comprenant :
• l'entrée des données d'entrée dans le modèle d'apprentissage automatique,
• la réception de données de sortie du modèle d'apprentissage automatique,
• la réduction d'un écart entre les données de sortie et les données cibles par modification des paramètres du modèle,
• la réception d'une image transformée du modèle d'apprentissage automatique entraîné.

6. Dispositif (1) selon la revendication 5, comprenant en outre un dispositif de piégeage pour arthropodes, la zone de collecte étant un composant du dispositif de piégeage.

7. Support de stockage non volatil lisible par ordinateur sur lequel est stocké un programme informatique qui, lorsqu'il est exécuté par une unité de commande d'un dispositif (1) de surveillance d'arthropodes, amène l'unité de commande à exécuter les étapes suivantes :
• la réception d'une image, l'image montrant une zone de collecte pour arthropodes, la zone de collecte comprenant un identifiant,
• la réduction d'un écart entre l'identifiant représenté dans l'image et une référence par transformation de l'image,
• le stockage de l'image transformée et/ou la transmission de l'image transformée à un système informatique séparé et la reconnaissance, la localisation, l'identification et/ou le comptage d'arthropodes dans l'image transformée,
dans lequel l'identifiant est ou comprend une forme, une couleur, une structure, une texture, un motif, un hachurage, un signe, un code et/ou une autre caractéristique visible,
**caractérisé en ce que** la réduction de l'écart comprend :
• l'entrée de l'image dans un modèle d'apprentissage automatique entraîné, le modèle d'apprentissage automatique étant configuré pour générer une image transformée sur la base de l'image et sur la base de paramètres du modèle, le modèle d'apprentissage automatique ayant été entraîné sur la base de données d'entraînement, les données d'entraînement comprenant des données d'entrée et des données cibles, les données d'entrée comprenant des images d'entraînement, les données cibles comprenant au moins une image d'entraînement, chaque image d'entraînement montrant une zone de collecte comprenant l'identifiant, l'entraînement du modèle d'apprentissage automatique comprenant :
• l'entrée des données d'entrée dans le modèle d'apprentissage automatique,
• la réception de données de sortie du modèle d'apprentissage automatique,
• la réduction d'un écart entre les données de sortie et les données cibles par modification des paramètres du modèle,
• la réception d'une image transformée du modèle d'apprentissage automatique entraîné.
